# EUROPÄISCHE PATENTANMELDUNG

(11) **EP 1 347 180 A1**
(43) Veröffentlichungstag der Anmeldung: **24.09.2003**
(21) Anmeldenummer: 03005278.1
(22) Anmeldetag: 10.03.2003
(51) Int. Cl.: F16B 5/02, F16B 2/06, F16B 2/14, F16B 12/20, F16B 12/32, F16B 12/44

(54) **Vorrichtung zum Verbinden wenigstens zweier Bauteile**

(30) Priorität: 11.03.2002 DE 10210627
(71) Anmelder: Hamit, Cordan, 82515 Wolfratshausen (DE)
(72) Erfinder: Hamit, Cordan, 82515 Wolfratshausen (DE)
(74) Vertreter: Müller, Gerald Christian

(57) **Zusammenfassung**

Vorrichtung zum Verbinden wenigstens zweier Bauteile, insbesondere wenigstens zweier Möbelteile, wie etwa ein Tischbein und eine Tischplatte, bei welcher eine verbesserte Vorrichtung zum Verbinden zweier oder mehrerer Bauteile (14,15) geschaffen wird, die sich durch Stabilität, Paßgenauigkeit und Reproduzierbarkeit auszeichnet. Zur Lösung dieser Aufgabe wird vorgeschlagen,
- ein erstes Anlagemittel (2), welches an dem ersten Bauteil befestigbar ist,
- ein zweites Anlagemittel (3), welches an dem zweiten Bauteil befestigbar ist, zu schaffen, wobei
- das erste und das zweite Anlagemittel in verbundenem Zustand der Bauteile entlang wenigstens einer Anlagefläche (12) aneinander anliegen,
- an dem ersten Anlagemittel eine Führungshülse (4) mit einer Durchgangsbohrung (5) und eine erste Spannhülse (6) mit einem ersten Innenkonus (7) angeordnet sind, wobei die Längsachse (8) der Durchgangsbohrung mit der Längsachse des ersten Innenkonus fluchtet,
- an dem zweiten Anlagemittel (3) eine zweite Spannhülse (9) mit einem zweiten Innenkonus (10) angeordnet ist, und
- der Abstand (a1) der Längsachse (11) des zweiten Innenkonus von der Anlagefläche (12) kleiner als der oder gleich dem Abstand (a2) der Längsachse (8) des ersten Innenkonus (7) von der Anlagefläche ist, sowie
- einen Spannbolzen (13), der einen Außenkonus (16) aufweist, welcher mit dem ersten und zweiten Innenkonus (7,10) korrespondiert, und der mit Hilfe der Führungshülse (4) in die erste und zweite Spannhülse einführbar ist, wodurch das erste und das zweite Anlagemittel (2,3) in Anlage aneinander gebracht werden.

## Beschreibung

### I. Anwendungsgebiet

Die Erfindung betrifft eine Vorrichtung zum Verbinden wenigstens zweier Bauteile, insbesondere wenigstens zweier Möbelteile, wie etwa ein Tischbein und eine Tischplatte.

### II. Technischer Hintergrund

Häufig sieht man sich im Alltag mit dem Problem konfrontiert, zwei oder mehrere Bauteile miteinander zu verbinden. In diesem Zusammenhang sind verschiedene Aspekte von Bedeutung. Zum Einen soll zunächst eine möglichst stabile Verbindung der beiden Bauteile hergestellt werden, d. h. dass die Verbindung auch unter Einwirkung äußerer Belastungen intakt bleiben soll. Weiterhin wird üblicherweise verlangt, dass die Verbindung von Bauteilen möglichst passgenau und präzise sein soll, so dass eine wohl definierte räumliche Ausrichtung der beiden aneinander zu befestigten Bauteile zueinander gewährleistet wird. Für den Fall, dass die gewünschte Verbindung der Bauteile nicht von dauerhafter Natur sein soll, also ein eventuelles voneinander Lösen und darauf folgendes wieder aneinander Befestigen der Bauteile beabsichtigt wird, ist dementsprechend die Reproduzierbarkeit der Verbindung ebenfalls von Bedeutung. Unter Reproduzierbarkeit in diesem Zusammenhang wird verstanden, dass die Verbindung zwischen den Bauteilen auch nach mehrmaligem Lösen und Wiederverbinden die gewünschte Stabilität und Paßgenauigkeit aufweist. Auf manchen Gebieten kann es darüber hinaus aus ästhetischen Gründen von Bedeutung sein, dass der Mechanismus, der die beiden Bauteile miteinander verbindet, möglichst unscheinbar ist.

Als Beispiel für ein Gebiet, auf dem sämtliche oben genannten Aspekte von Bedeutung sind, wird hier der Möbelbau angeführt. Es ist offensichtlich, dass die Verbindungen der einzelnen Bauteile von Möbeln eine ausreichende Stabilität aufweisen müssen, um die Alltagsbelastungen, sei es beispielsweise als Tisch, Bett oder Schrank, überstehen zu können. Aus den Ansprüchen des Benutzers an die Ästhetik ergibt sich, dass die Verbindungen der Möbelbauteile passgenau und darüber hinaus möglichst von außen nicht zu erkennen sein sollen. Auf der anderen Seite ist es zum Transport von Möbeln jedoch meistens notwendig, diese zumindest teilweise wieder auseinander zu nehmen, wodurch die Reproduzierbarkeit der Verbindung Bedeutung erlangt.

Ein heutzutage übliches System, welches diesen Ansprüchen zumindest bei der Verbindung von zwei Bauteilen gerecht werden soll, ist der sog. Exzenter-Korpusverbinder. Dieses System besteht aus einem Verbindungsbolzen, der an dem einen Bauteil befestigt wird, und einem Korpus-Gehäuse, welches an dem zweiten Bauteil befestigt wird. Zum Herstellen der Verbindung wird dann zunächst das freie Ende der Verbindungsbolzens in das Korpus-Gehäuse eingebracht und dieser daraufhin gedreht. Aufgrund des exzentrischen Aufbaus des Innengehäuse des Korpus-Gehäuses werden durch diese Drehbewegung und die dadurch hervorgerufene Zugbewegung an dem Befestigungsbolzen die beiden Bauteile gegenseitig verspannt.

Dieses Prinzip besitzt jedoch, wie im Folgenden dargestellt, verschiedene Nachteile. Zunächst ist festzustellen, dass ein nicht unerhebliches Drehmoment benötigt wird, um die notwendige Vorspannung zwischen den beiden Bauteilen zu erreichen. Darüber hinaus ist die Fläche, auf welcher der Verbindungsbolzen in dem Korpus-Gehäuse anliegt, relativ klein, so dass an den Bauteilen angreifende Belastungen zu sehr großer Materialbeanspruchung bzw. Flächenlasten in diesen Bereichen führen. Darüber hinaus sind Fälle denkbar, in denen die Länge des Verbindungsbolzens und die Ausmaße des Korpus-Gehäuses hinsichtlich der Größe der aneinander zu befestigenden Bauteile problematisch sein können.

Aus dem deutschen Gebrauchsmuster DE 94 06 276 U1 ist eine Eckverbindung für zwei Tischwangen und ein Tischbein bekannt, wobei am Tischbein vorgesehene Durchbrechungen in an den freien Enden der Tischwangen ausgebildete Vorsprünge eingreifen.

Das Patent GB 195 388 beschreibt eine Verschlusssicherung für Kisten, bei der ein Bolzen durch zwei in den beiden Schenkeln einer Klammer ausgebildete Löcher geführt wird und dabei deren elastischen Rand gegen das Holz der zu verschließenden Kiste verspannt. Ein zerstörungsfreies Lösen dieser Verbindung ist nicht möglich.

In der US 1,334,851 wird ein Möbelverbinder dargestellt, bei dem eine Zunge eines am ersten zu verbindenden Teil befestigten ersten Elements in eine Lasche eines am zweiten zu verbindenden Teil befestigten zweiten Elements eingreift, wodurch eine Verbindung der beiden Teile erfolgt.

### III. Darstellung der Erfindung

### a) Technische Aufgabe

Es ist daher die Aufgabe der vorliegenden Erfindung, eine verbesserte Vorrichtung zum Verbinden zweier oder mehrerer Bauteile zu schaffen, die sich durch Stabilität, Paßgenauigkeit und Reproduzierbarkeit auszeichnet.

### b) Lösung der Aufgabe

Diese Aufgabe wird durch die Merkmale der Ansprüche 1 und 2 gelöst. Vorteilhafte Ausführungsformen ergeben sich aus den Unteransprüchen.

Der Erfolg der Erfindung beruht auf der Verwendung zweier Anlagemittel, die an den miteinander zu verbindenden Bauteilen befestigbar sind, und eines zugehörigen Spannbolzens. Die beiden Anlagemittel liegen hierbei im verbundenen Zustand der Bauteile in wenigstens einer Anlagefläche aneinander an. Das Verbinden der beiden Bauteile wird durch ein Verspannen der beiden Anlagemittel über die gesamte Anlagefläche hinweg erreicht. Zu diesem Zweck werden eine an dem ersten Anlagemittel befestigte Führungshülse sowie zwei Spannhülsen verwendet, wobei die erste Spannhülse ebenfalls an dem ersten Anlagemittel und die zweite Spannhülse an dem zweiten Anlagemittel befestigt sind. Während die Führungshülse eine Durchgangsbohrung aufweist, sind die Innenflächen der beiden Spannhülsen je als Konus bzw. Kegelstumpf ausgebildet, wobei der Innenkonus der zweiten Spannhülse den Innenkonus der ersten Spannhülse vorzugsweise bündig und mit demselben Konuswinkel fortsetzt, wenn die beiden Spannhülsen in fluchtender Anordnung der Längsachsen der beiden Innenkonusse zueinander ausgerichtet werden. Die beiden Innenkonusse der Spannhülsen bilden somit ihrerseits vorzugsweise einen einheitlichen Kegelstumpf, der denselben Kegelöffnungswinkel aufweist wie jeder der beiden Innenkonusse. Darüber hinaus weist der Spannbolzen einen Außenkonus auf, welcher mit dem ersten und zweiten Innenkonus der ersten und zweiten Spannhülse, d.h. mit dem vorzugsweise einheitlichen Kegelstumpf, korrespondiert. Die Anordnung der Führungshülse an dem ersten Anlagemittel ist hinsichtlich der sich ebenfalls an dem ersten Anlagemittel befindlichen ersten Spannhülse derart gewählt, dass die Längsachse der Durchgangsbohrung mit der Längsachse des ersten Innenkonus fluchtend zusammenfällt.

Um den gewünschten Effekt der Verspannung der beiden Anlagemittel bei Berührung der Bauteile entlang der Anlagefläche erreichen zu können, müssen die Führungshülse und die erste Spannhülse an dem ersten Anlagemittel sowie die zweite Spannhülse an dem zweiten Anlagemittel derart angeordnet sein, dass der Abstand der gemeinsamen Längsachse der Durchgangsbohrung der Führungshülse und des Innenkonus der ersten Spannhülse zur Anlagefläche größer als der Abstand der Längsachse des zweiten Innenkonus der zweiten Spannhülse zur Anlagefläche ist. Erfindungsgemäß gewünscht kann jedoch auch die verspannungslose Anlage der Anlagemittel aneinander sein. In diesem Fall ist der Abstand der gemeinsamen Längsachse der Durchgangsbohrung der Führungshülse und des Innenkonus der ersten Spannhülse zur Anlagefläche gleich dem Abstand der Längsachse des zweiten Innenkonus der zweiten Spannhülse zur Anlagefläche.

Wird der Spannbolzen mit Hilfe der Führungshülse in die erste und zweite Spannhülse eingebracht, so bewirkt dies eine an der zweiten Spannhülse angreifende Kraft, welche bestrebt ist, die fluchtende Ausrichtung der Längsachse des zweiten Innenkonus der zweiten Spannhülse mit der gemeinsamen Längsachse des ersten Innenkonus der ersten Spannhülse und der Durchgangsbohrung der Führungshülse zu erreichen. Diese Kraft wird durch die Verbindung der zweiten Spannhülse mit dem zweiten Anlagemittel auf dieses übertragen, und sie bzw. ihre senkrecht auf der Anlagefläche stehende Komponente dieser Kraft im Bezug auf die Anlagefläche bewirkt schließlich den gewünschten Effekt des Verspannens der beiden Anlagemittel gegeneinander. Mit zunehmendem Eindringen des Spannbolzens in die erste und zweite Spannhülse erhöht sich die wirkende Kraft und somit die Verspannung der beiden Anlagemittel. Vorzugsweise ist hier der Öffnungswinkel des Außenkonus bzw. der Innenkonusse so zu wählen, dass bei möglichst geringem axialen Kraftaufwand beim Einbringen des Außenkonus in Richtung der gemeinsamen Längsachse von Führungshülse und erster Spannhülse eine hinreichend große Kraftwirkung senkrecht zu dieser Achse erreicht werden kann.

Durch geeignete Auswahl der geometrischen Parameter kann erreicht werden, dass eine optimale Kraftwirkung, entsprechend einer optimalen Verspannung der Anlagemittel, gegeben ist, wenn der Spannbolzen seinen Endzustand erreicht, d. h. wenn der Außenkonus des Spannbolzens komplett an den Innenkonussen der beiden Spannhülsen anliegt. In diesem Zustand fallen die gemeinsame Längsachse der Führungshülse und der ersten Spannhülse und die Längsachse der zweiten Spannhülse zusammen. Da der Spannbolzen nicht weiter in die beiden Spannhülsen eingebracht werden kann, ist gewährleistet, dass dieser Endzustand reproduzierbar ist.

Anstatt den Innenkonus der ersten Spannhülse und den Innenkonus der zweiten Spannhülse einander bündig und mit demselben Konuswinkel fortsetzen zu lassen, ist erfindungsgemäß auch denkbar, die beiden vorgenannten Innenkonusse einander bei gleichem Konuswinkel nicht bündig fortsetzen zu lassen. In diesem Fall sind die beiden Spannhülsen im Endzustand voneinander beabstandet, sofern der Außenkonus des Spannbolzens stufenlos verläuft. Bei Ausbildung des Außenkonus mit Stufe wäre auch denkbar, daß die beiden Spannhülsen im Endzustand aneinander anliegen.

Eine weitere Alternative besteht darin, die beiden Spannhülsen mit unterschiedlichen Innenkonuswinkeln zu versehen und den Außenkonus mit einem ersten und einem zweiten Axialabschnitt auszubilden, wobei der Außenkonuswinkel des ersten Axialabschnittes mit dem Innenkonuswinkel der ersten Spannhülse und der Außenkonuswinkel des zweiten Axialabschnittes mit dem Innenkonuswinkel der zweiten Spannhülse korrespondiert.

Hinsichtlich der Vielfalt der möglichen geometrischen Ausbildung der Anlagefläche, entlang welcher das erste und das zweite Anlagemittel im verbundenen Zustand der Bauteile aneinander anliegen, ist lediglich eine Bedingung zu erfüllen. Um überhaupt eine Verklemmung der Anlagemittel über die Anlagefläche zu erreichen, muss gewährleistet sein, dass die Anlagefläche mindestens einen Bereich aufweist, auf welchem die Längsachsen der Führungshülse und ersten Spannhülse sowie der zweiten Spannhülse nicht senkrecht stehen, da ansonsten mangels normal auf der Anlagefläche stehender Kraftkomponente keine Flächenpressung zwischen den Anlagemitteln erzeugt werden kann. Vorzugsweise sollte die Anlagefläche in Form von einer oder mehreren Ebenen ausgebildet sein. Der Fall von mehreren Anlageebenen tritt z.B. auf, wenn plattenförmige Anlagemittel eine gewinkelte Form besitzen. Eine gewinkelte Ausbildung der Anlagemittel ist zweckmäßig, wenn eine gleichzeitige Verbindung von einem ersten Bauteil mit mehreren weiteren Bauteilen gewünscht wird, wie es beispielsweise für eine Eckverbindung bei einem Tischbein und zwei Tischplattenrahmenelementen der Fall ist.

Denkbar sind darüber hinaus auch Fälle, in denen die zu verbindenden Bauteile selbst die Anlagemittel aufweisen. Die Anlagefläche wird in diesem Fall durch den Bereich, in dem die zu verbindenden Bauteile in verbundenem Zustand aneinander anliegen, definiert.

Um ein kontrollierbares und reproduzierbares Einbringen des Spannbolzens mittels der Führungshülse in die beiden Spannhülsen zu ermöglichen, sind verschiedene Lösungen denkbar. Vorzugsweise weisen hier der Spannbolzen einen Bereich, der in Form eines Außengewindes ausgebildet ist, und die Durchgangsbohrung der Führungshülse ein korrespondierendes Innengewinde auf. Die Führungshülse wirkt dabei als Antriebshülse für den Spannbolzen, die den Spannbolzen in axialer Richtung vorantreibt. In diesem Fall kann durch einfaches Einschrauben des Bolzens gewährleistet werden, dass die Endposition des Spannbolzens kontrollierbar und reproduzierbar erreicht wird. Diese Ausbildungsform mit Gewinde stellt jedoch nicht die einzige Möglichkeit dar. Denkbar wäre hier auch eine Exzentervorrichtung in der Art eines Schnellspanners wie zur Befestigung einer Sattelstütze in einem Fahrradrahmen, mit Hilfe derer der Spannbolzen eingeführt wird. Benötigt würde in diesem Fall jedoch zusätzlich ein Entriegelungsmechanismus gekoppelt mit einer starken Feder, welche den Spannbolzen beim Lösen des Schnellspanners aus den Spannhülsen drückt.

Insbesondere im Falle der Verwendung eines Gewindes ist von Vorteil, dass der Spannbolzen schon kurz nach Beginn des Einführens in die erste Spannhülse eine auf die zweite Spannhülse wirkende Kraft ausübt, welche letztere in Richtung der Längsachse der Durchgangsbohrung bzw., des ersten Innenkonus zieht. Die Gewindeverbindung zwischen Führungshülse und Spannbolzen ist daher insbesondere während des Einschraubvorganges im Wesentlichen frei von senkrecht zur Einbringrichtung angreifenden Kräften ist. Dies wiederum hat zur Folge, dass einerseits die Gewindeverbindung nicht verkantet, übermäßig belastet und abgenutzt wird, und zum anderen das Drehmoment, welches zum Einbringen des Spannbolzens benötigt wird, minimal bleibt.

Die vorliegende Erfindung ist in einer Vielzahl von Anwendungsfällen einsetzbar. Beispielhaft seien folgende Anwendungen genannt:
- Verbindungen jeder Art im Bereich des Möbelbaus, sog. Möbelverbinder
- Verbindungen jeder Art auf dem Gebiet des Gerüstbaus, des Messebaus und auf sonstigen Gebieten der Konstruktionstechnik
- Verbindungen jeder Art im Bereich des Stahl- und/oder Betonbaus, z.B. im Brückenbau

### c) Ausführungsbeispiele

Die Erfindung wird nachstehend anhand bevorzugter Ausführungsbeispiele und mit Bezug auf die Zeichnungen näher erläutert. Es zeigen:
- Fig. 1:: Eine Seitenansicht der erfindungsgemäßen Vorrichtung, nämlich der beiden Anlagemittel, der darauf befestigten Führungshülse und der beiden Spannhülsen sowie des Spannbolzens in nicht verbundenem Zustand;
- Fig. 2a:: eine Seitenansicht der erfindungsgemäßen Vorrichtung, befestigt an den miteinander zu verbindenden Bauteilen, unmittelbar vor Einbringen des Spannbolzens, wobei die Anlagemittel Bestandteil der Vorrichtung sind;
- Fig. 2b:: eine Seitenansicht der erfindungsgemäßen Vorrichtung, befestigt an den miteinander zu verbindenden Bauteilen, unmittelbar vor Einbringen des Spannbolzens, wobei die Anlagemittel durch Oberflächenbereiche der Bauteile definiert werden;
- Fig. 2c:: eine Seitenansicht der erfindungsgemäßen Vorrichtung, befestigt an den miteinander zu verbindenden Bauteilen, unmittelbar vor Einbringen des Spannbolzens, wobei die Anlagemittel durch Oberflächenbereiche der Bauteile definiert werden, in alternativer Bauform;
- Fig. 3:: eine Aufsicht auf die erfindungsgemäße Vorrichtung gemäß Fig. 1 bzw. 2a, nämlich auf die beiden Anlagemittel inklusive der Hülsen sowie des Spannbolzens in nicht verbundenem Zustand; und
- Fig. 4:: eine Schnittansicht einer erfindungsgemäßen Vorrichtung mit gewinkelten Anlagemitteln in Blickrichtung der Längsachsen der Hülsen, wobei auch die zu verbindenden Bauteile gezeigt sind, in nicht verbundenem Zustand.

Gleiche Bezugszeichen in den Figuren kennzeichnen gleiche Teile mit gleichen Funktionen, sofern sich aus dem jeweiligen Zusammenhang nichts Anderes ergibt.

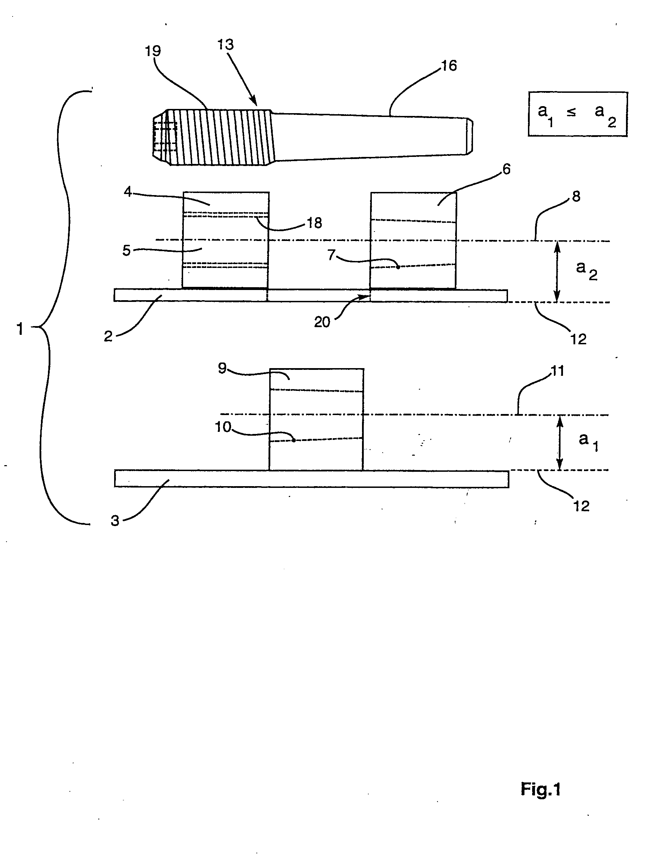

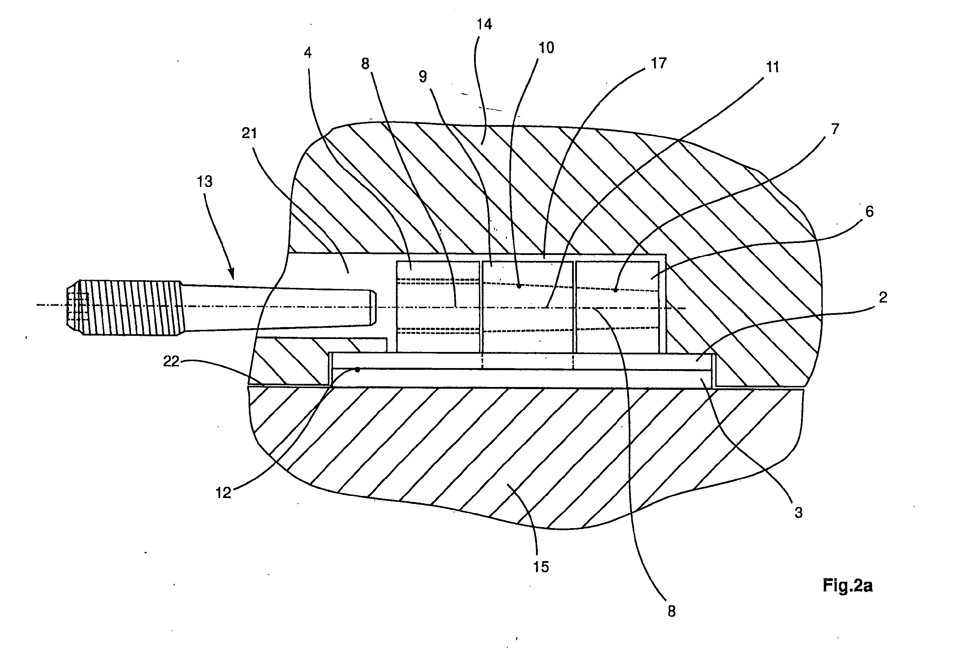

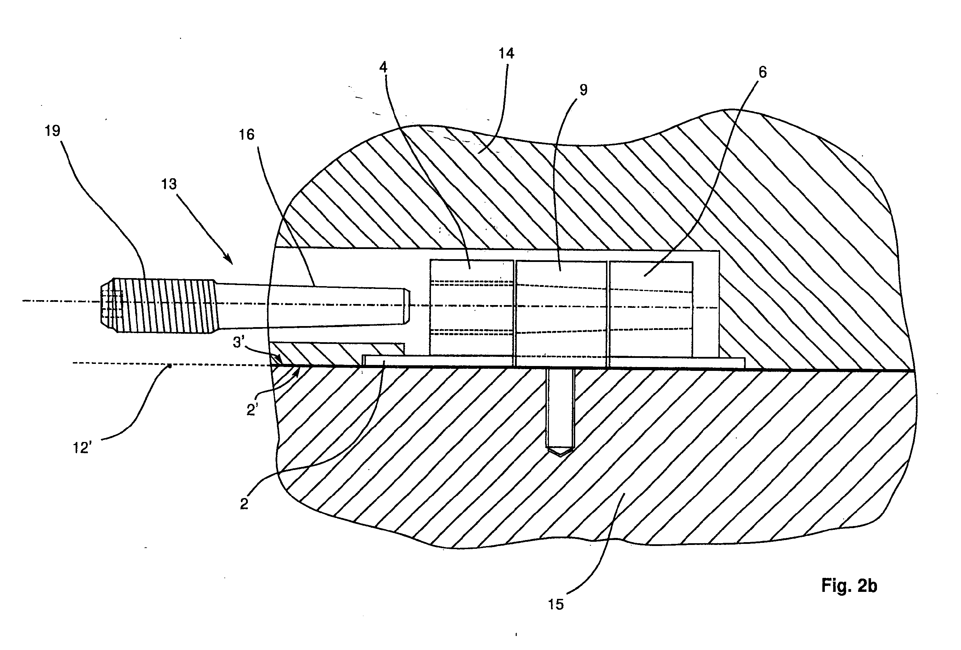

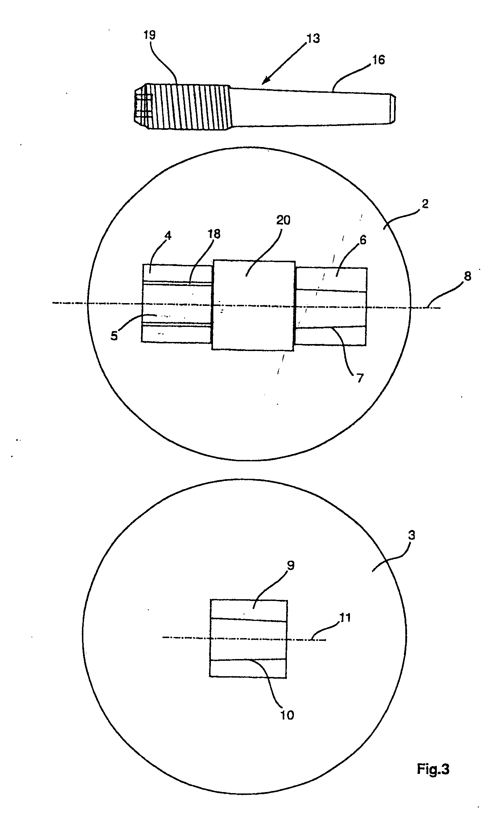

Bezugnehmend auf Fig. 1 und Fig. 3 wird dort eine bevorzugte Ausführungsart der erfindungsgemäßen Vorrichtung 1 in Seitenansicht bzw. -aufsicht gezeigt. Das erste Anlagemittel und das zweite Anlagemittel sind hier als plattenförmige Kreisscheiben 2 und 3 ausgebildet, wobei die erste Scheibe 2 eine rechteckige Aussparung 20 im Zentrum aufweist. Diese Aussparung 20 ist bezüglich ihrer Dimensionierung so ausgelegt, dass die an der zweiten Scheibe 3 befestigte zweite Spannhülse 9 durch die Aussparung 20 gesteckt werden kann. Die auf der ersten Scheibe 2 befindliche Führungshülse 4 weist eine Durchgangsbohrung 5 auf, welche hier mit einem Innengewinde 18 versehen ist. Die ebenfalls auf der ersten Scheibe 2 befindliche erste Spannhülse 6 weist eine Innenkonusfläche 7 auf. Die Führungshülse 4 und die erste Spannhülse 6 sind auf der ersten Scheibe 2 so angeordnet, dass die Durchgangsbohrung 5 und der erste Innenkonus 7 die gemeinsame Längsachse 8 besitzen. Die auf der zweiten Scheibe 3 befindliche zweite Spannhülse 9 weist einen zweiten Innenkonus 10 auf, welcher die Längsachse 11 besitzt. Der Spannbolzen 13 weist einen Abschnitt mit einem Gewinde 19 auf, welches beispielsweise mittels Imbusschlüssel in das Innengewinde 18 der Durchgangsbohrung 5 der Führungshülse 4 eingeschraubt werden kann. Desweiteren weist der Spannbolzen 13 eine Außenkonusfläche 16 auf, welche zu der ersten Innenkonusfläche 7 und der zweiten Innenkonusfläche 10 komplementär ist. Wie aus Fig. 2a ersichtlich, setzt in dieser Ausführungsform der zweite Innenkonus 10 der zweiten Spannhülse 9 den ersten Innenkonus 7 der ersten Spannhülse 6 bündig und mit gleichem Öffnungswinkel fort, wenn die beiden Hülsen in dem Endzustand axial hintereinander anliegen.

Fig. 2a zeigt die erfindungsgemäße Vorrichtung kurz vor Einbringen des Spannbolzens 13. Die erste Scheibe 2 ist an dem ersten Bauteil 14 befestigt, die zweite Scheibe 3 ist an dem zweiten Bauteil 15 befestigt. Die an der zweiten Scheibe 3 befindliche zweite Spannhülse 9 wurde durch die Aussparung 20 in der ersten Scheibe 2 gesteckt und die beiden Scheiben 2 und 3 liegen in der Anlagefläche 12 lose aneinander. Diese Anlagefläche 12 wird in Fig. 2a durch die gesamte untere Fläche der ersten Scheibe 2, mit Ausnahme der Aussparung 20, definiert. Entsprechend Fig. 2a in Verbindung mit Fig. 1 ist der Abstand der Längsachse 8 der Durchgangsbohrung 5 und des ersten Innenkonus 7 zur Anlagefläche 12 gegeben durch a2, während der Abstand der Längsachse 11 des zweiten Innenkonus 10 zur Anlagefläche 12 durch a1 gegeben ist. Da erfindungsgemäß die Ungleichung a1 ≤ a2 gelten soll, liegt die Längsachse 11 des zweiten Innenkonus 10 in Fig. 2a im Vergleich zu der Längsachse 8 der Durchgangsbohrung 5 der Führungshülse 4 und dem ersten Innenkonus 7 näher an der Anlagefläche 12. Wird nun der Spannbolzen 13 in die Führungshülse 4 eingeschraubt und dadurch in die erste und zweite Spannhülse 6, 9 eingeführt, so bewirkt dies eine allmähliche Annäherung der beiden Längsachsen 8 und 11, wobei diese im Endzustand des komplett eingebrachten Spannbolzens 13 fluchtend zusammenfallen. Diese Annäherung beruht auf der sich aufgrund der Konusform ergebenden senkrecht zur Einbringrichtung wirkenden, nach oben gerichteten Kraft, die an der zweiten Spannhülse 9 angreift und diese zwischen Führungshülse 4 und erste Spannhülse 6 zieht. Falls die zweite Spannhülse 9 noch nicht an der ersten Spannhülse 6 anliegt, wie in Fig. 2a gezeigt, wird in der vorliegenden Ausführungsform erstere vor Erreichen des Endzustands von dem Spannbolzen 13 an letztere gedrückt. Da die zweite Spannhülse 9 fest mit der zweiten Scheibe 3 verbunden ist, wird die nach oben wirkende Kraft auf die Scheibe 3 übertragen und führt zu einer Verspannung der Scheibe 3 mit der Scheibe 2. Dies wiederum führt zu einer stabilen Verbindung der beiden Bauteile 14, 15.

Vorzugsweise wird hier die erste Scheibe 2 mit den daran befindlichen Hülsen in eine Aufnahmebohrung 17 im ersten Bauteil 14 eingebracht, so dass im verbundenen Zustand von außen nur der zum Einbringen des Spannbolzens 13 benötigte Bohrungsabschnitt 21 sichtbar bleibt. Durch geeignete Wahl der Tiefe der zur Aufnahme der Scheiben 2 und 3 vorgesehenen Ausfräsung im Bauteil 14 im Verhältnis zu den Dicken der Scheiben 2,3 kann erreicht werden, dass im verbundenen Endzustand ein Spalt 22 zwischen den beiden Bauteilen 14 und 15 vermieden wird.

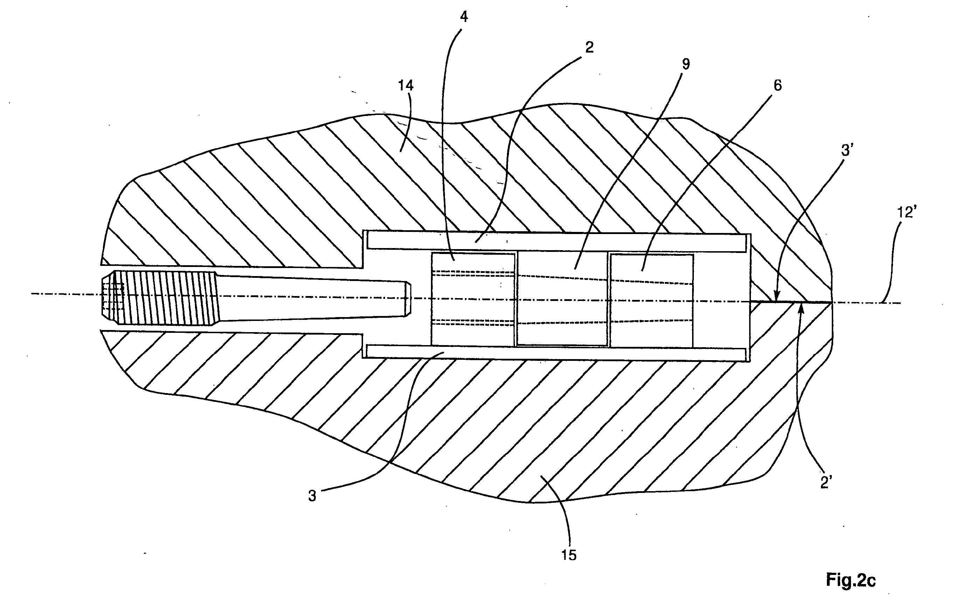

Alternativ zu dem in Fig. 2a dargestellten Fall, können, wie in Fig. 2b dargestellt, die Anlagemittel an den Bauteilen 14,15 selbst vorhanden sein, nämlich in Form eines Oberflächenbereiches 2' an dem ersten Bauteil 14 und eines Oberflächenbereiches 3' an dem zweiten Bauteil 15. In diesem Fall liegen die beiden Oberflächenbereiche 2', 3' im verbundenen Zustand der Bauteile 14, 15 entlang der Anlagefläche 12' aneinander an. Die zweite Spannhülse 9 kann bei dieser Variante ohne Scheibe 3 direkt mit dem Bauteil 15 verbunden sein, beispielsweise durch Verschrauben. Alternativ zu der in Fig. 2a und 2b gezeigten Anordnung, in welcher die zweite Spannhülse 9 von unten durch die erste Scheibe 2 gesteckt wird, um zwischen der Führungshülse 4 und der ersten Spannhülse 6 positioniert zu werden, kann dies auch auf die in Fig. 2c gezeigte Weise erreicht werden. In diesem Fall ist es nicht notwendig, dass die Scheibe 3 eine Aussparung 20 aufweist.

Die in den Figuren 1, 2a und 3 dargestellte Form der Anlagemittel 2 und 3 ist hier beispielhaft als Kreisscheibe gewählt worden. Darüber hinaus ist neben dieser in Aufsicht runden Form jede Geometrie der beiden Anlagemittel denkbar, z. B. quadratisch, rechteckig, sechseckig, dreieckig oder oval. Die Befestigung der Anlagemittel 2, 3 an den Bauteilen 14, 15 erfolgt vorzugsweise mittels Schrauben. Jedoch sind auch andere Befestigungsmöglichkeiten denkbar, wie z. B. mittels Nägeln, mittels Klebstoff oder mittels mit Widerhaken versehener Dorne. Die in den Figuren 2b bzw. 2c gezeigten Scheiben 2 bzw. 2 und 3 dienen dort lediglich als Befestigungsmittel zur Befestigung der jeweiligen Hülsen an den zu verbindenden Bauteilen, nicht als erfindungsgemäße Anlagemittel. In Fig. 2b kann die Befestigung der zweiten Spannhülse 9 an dem Bauteil 15 selbstverständlich auch mittels einer der Scheibe 2 entsprechenden Scheibe erfolgen.

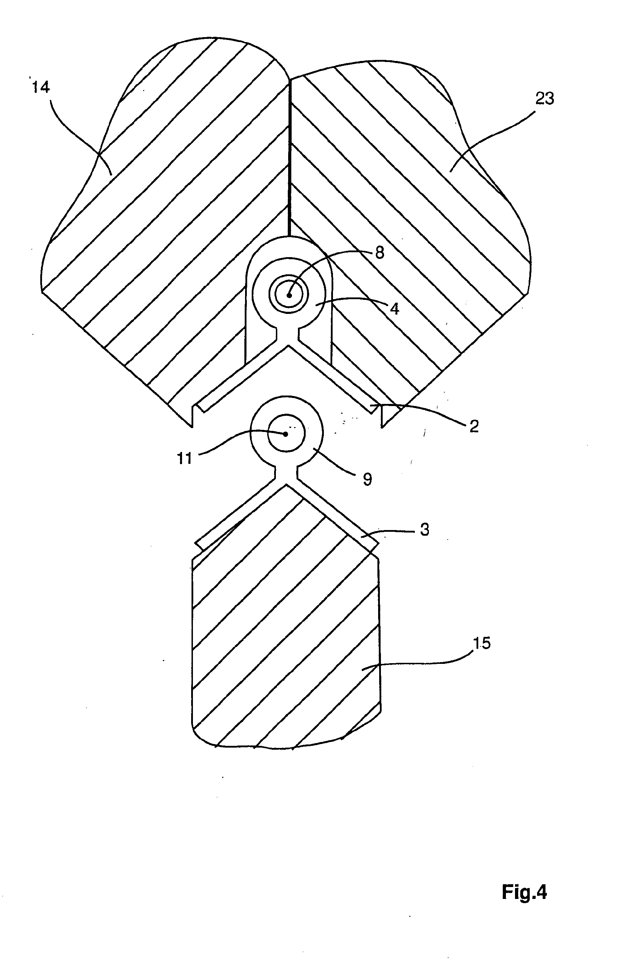

Wie in Fig. 4 dargestellt, können das erste Anlagemittel 2 und das zweite Anlagemittel 3 auch eine gewinkelte Form besitzen. Die Anlagefläche 12 wird in diesem Fall durch die Ebenen definiert, in welchen die beiden Anlagemittel 2, 3 im verbundenen Zustand der Bauteile aneinander anliegen. Eine gewinkelte Form der Anlagemittel kann erforderlich bzw. erwünscht sein, wenn ein erstes Bauteil 14 gleichzeitig an mehreren anderen Bauteilen 15,23 befestigt werden soll oder eine sog. Eckverbindung geschaffen werden soll.

In der bevorzugten Ausführungsform werden, wie aus den Figuren ersichtlich, genau eine Führungshülse 4 sowie eine erste Spannhülse 6 und eine zweite Spannhülse 9 benutzt. Der Gebrauch von genau einer Führungshülse und zwei Spannhülsen ist jedoch nicht zwingend. Auch ein Gebrauch von mehreren Führungshülsen und mehr als zwei Spannhülsen ist durchaus denkbar. Auch die im Ausführungsbeispiel dargestellte beabstandete Anordnung den Führungshülse 4 und der ersten Spannhülse 6 ist nicht zwingend, ein bündiges Aneinandersetzen der ersten Spannhülse an die Führungshülse wäre ebenfalls denkbar, so daß Führungshülse 4, erste Spannhülse 6 und zweite Spannhülse 9 in dieser Reihenfolge hintereinander angeordnet wären. Neben der in den Figuren dargestellten zylindrischen Außenform der Hülsen sind auch Hülsen mit Außenformen wie Quader, Würfel oder sonstiger beliebiger geometrischer Ausbildung denkbar.

Als Material für die Anlagemittel 2, 3, die Führungshülse 4, die erste Spannhülse 6, die zweite Spannhülse 9 und den Spannbolzen 13 kommen insbesondere Stahl, Aluminium, Kupfer, Messing oder sonstige Materialien ausreichender Belastbarkeit in Frage.

### BEZUGSZEICHENLISTE

- 1: Vorrichtung
- 2: erstes Anlagemittel
- 2': erstes Anlagemittel (Oberflächenbereich)
- 3: zweites Anlagemittel
- 3': zweites Anlagemittel (Oberflächenbereich)
- 4: Führungshülse
- 5: Durchgangsbohrung
- 6: erste Spannhülse
- 7: erster Innenkonus
- 8: Längsachse der Durchgangsbohrung / Längsachse des ersten Innenkonus
- 9: zweite Spannhülse
- 10: zweiter Innenkonus
- 11: Längsachse zweiter Innenkonus
- 12: Anlagefläche
- 12': Anlagefläche
- 13: Spannbolzen
- 14: erstes Bauteil
- 15: zweites Bauteil
- 16: Außenkonus des Spannbolzen
- 17: Aufnahmebohrung im ersten Bauteil (14)
- 18: Gewinde Bohrung
- 19: Gewinde Bolzen
- 20: Aussparung
- 21: Bohrungsabschnitt zum Einbringen des Spannbolzens (13)
- 22: Spalt zwischen (14) und (15)
- 23: drittes Bauteil

- a1: Abstand Längsachse (11) zur Anlagefläche
- a2: Abstand Längsachse (8) zur Anlagefläche

## Patentansprüche

1. Vorrichtung zum Verbinden zweier oder mehrerer Bauteile, mit
- einem ersten Anlagemittel (2), welches an dem ersten Bauteil (14) befestigbar ist,
- einem zweiten Anlagemittel (3), welches an dem zweiten Bauteil (15) befestigbar ist, wobei
- das erste und das zweite Anlagemittel (2, 3) in verbundenem Zustand der Bauteile (14,15) entlang wenigstens einer Anlagefläche (12) aneinander anliegen,
- an dem ersten Anlagemittel (2) eine Führungshülse (4) mit einer Durchgangsbohrung (5) und eine erste Spannhülse (6) mit einem ersten Innenkonus (7) angeordnet sind, wobei die Längsachse (8) der Durchgangsbohrung (5) mit der Längsachse (8) des ersten Innenkonus (7) fluchtet,
- an dem zweiten Anlagemittel (3) eine zweite Spannhülse (9) mit einem zweiten Innenkonus (10) angeordnet ist, und
- der Abstand (a₁) der Längsachse (11) des zweiten Innenkonus (10) von der Anlagefläche (12) kleiner als der oder gleich dem Abstand (a₂) der Längsachse (8) des ersten Innenkonus (7) von der Anlagefläche (12) ist, sowie
- einem Spannbolzen (13), der einen Außenkonus (16) aufweist, welcher mit dem ersten und zweiten Innenkonus (7, 10) korrespondiert und der mit Hilfe der Führungshülse (4) in die erste und zweite Spannhülse (6, 9) einführbar ist, wodurch das erste und das zweite Anlagemittel (2, 3) in Anlage aneinander gebracht werden.

2. Vorrichtung zum Verbinden zweier oder mehrerer Bauteile, wobei das erste Bauteil (14) ein erstes Anlagemittel (2') und das zweite Bauteil (15) ein zweites Anlagemittel (3') aufweist, und wobei das erste und das zweite Anlagemittel (2',3') in verbundenem Zustand der Bauteile (14,15) in wenigstens einer Anlagefläche (12') aneinander anliegen, mit
- einer Führungshülse (4) mit einer Durchgangsbohrung (5) und einer ersten Spannhülse (6) mit einem ersten Innenkonus (7), die derart an dem ersten Bauteil (14) anordenbar sind, dass die Längsachse (8) der Durchgangsbohrung (5) mit der Längsachse (8) des ersten Innenkonus (7) fluchtet,
- einer an dem zweiten Bauteil (15) anordenbaren zweiten Spannhülse (9) mit einem zweiten Innenkonus (10),
- wobei der Abstand der Längsachse (11) des zweiten Innenkonus (10) von der Anlagefläche (12') kleiner als der oder gleich dem Abstand der Längsachse (8) des ersten Innenkonus (7) von der Anlagefläche (12') ist, und
- einem Spannbolzen (13), der einen Außenkonus (16) aufweist, welcher mit dem ersten und zweiten Innenkonus (7, 10) korrespondiert, und der mit Hilfe der Führungshülse (4) in die erste und zweite Spannhülse (6, 9) einführbar ist, wodurch das erste und das zweite Anlagemittel (2', 3') in Anlage aneinander gebracht werden.

3. Vorrichtung nach Anspruch 1 oder 2,
**dadurch gekennzeichnet, dass**
der zweite Innenkonus (10) bei fluchtender Anordnung seiner Längsachse (11) mit der Längsachse (8) des ersten Innenkonus (7) diesen bündig fortsetzt.

4. Vorrichtung nach einem der vorangehenden Ansprüche,
**dadurch gekennzeichnet, dass**
der erste Innenkonus (7) und der zweite Innenkonus (10) den gleichen Konuswinkel aufweisen.

5. Vorrichtung nach einem der vorangehenden Ansprüche,
**dadurch gekennzeichnet, dass**
genau eine Führungshülse (4) und genau zwei Spannhülsen (6, 9) vorhanden sind.

6. Vorrichtung nach einem der vorangehenden Ansprüche,
**dadurch gekennzeichnet, dass**
die Führungshülse (4) und die erste Spannhülse (6) voneinander beabstandet angeordnet sind, so daß ein Zwischenraum zur Aufnahme der zweiten Spannhülse (9) entsteht.

7. Vorrichtung nach Anspruch 6,
**dadurch gekennzeichnet, dass**
das erste Anlagemittel (2) eine zwischen der Führungshülse (4) und der ersten Spannhülse (6) liegende Aussparung (20) zum Hindurchführen der zweiten Spannhülse (9) aufweist.

8. Vorrichtung nach einem der vorangehenden Ansprüche,
**dadurch gekennzeichnet, dass**
das erste Anlagemittel (2) und das zweite Anlagemittel (3) plattenförmig ausgebildet sind.

9. Vorrichtung nach einem der vorangehenden Ansprüche,
**dadurch gekennzeichnet, dass**
die Anlagemittel (2, 3) gewinkelt sind, so daß eine gewinkelte Anlagefläche (12) entsteht.

10. Vorrichtung nach einem der vorangehenden Ansprüche,
**dadurch gekennzeichnet, dass**
die Durchgangsbohrung (5) der Führungshülse (4) ein Innengewinde (18) aufweist und der Spannbolzen (13) einen Abschnitt aufweist, der mit einem entsprechenden Außengewinde (19) versehen ist.
